# EUROPÄISCHE PATENTSCHRIFT

(11) **EP 2 130 337 B1**
(45) Veröffentlichungstag und Bekanntmachung des Hinweises auf die Patenterteilung: **31.08.2016**
(21) Anmeldenummer: 08718389.3
(22) Anmeldetag: 02.04.2008
(51) Int. Cl.: H04L 12/58, H04L 29/06

(54) **VERFAHREN UND SYSTEM ZUM BEREITSTELLEN EINES REL-TOKENS**
METHOD AND SYSTEM FOR PROVIDING AN REL TOKEN
PROCÉDÉ ET SYSTÈME POUR PRÉPARER UN JETON REL

(30) Priorität: 03.04.2007 DE 102007016117
(43) Veröffentlichungstag der Anmeldung: 09.12.2009
(73) Patentinhaber: Siemens Aktiengesellschaft, 80333 München (DE)
(72) Erfinder: SHANMUGAM, Murugaraj, 50969 Köln (DE); TSCHOFENIG, Hannes, 02180 Espoo (FI)
(86) Internationale Anmeldenummer: PCT/EP2008/053928
(87) Internationale Veröffentlichungsnummer: WO 2008/119817

(56) Entgegenhaltungen:
- US-A1- 2006 206 931
- OASIS OPEN 2006: "Security Assertion Markup Language (SAML) V2.0 Technical Overview" SSTC-SAML-TECH-OVERVIEW-2.0-DRAFT-13, [Online] 21. Februar 2007 (2007-02-21), Seiten 1-50, XP002495628 Gefunden im Internet: URL:http://www.oasis-open.org/committees/d ownload.php/22553/sstc-saml-tech-overview- 2%200-draft-13.pdf> [gefunden am 2008-09-11]
- OASIS OPEN 2002-2006: "Web Services Security Rights Expression Language (REL) Token Profile 1.1" WSS-V1.1-SPEC-CS-REL-TOKEN-PROFILE, [Online] 1. Februar 2006 (2006-02-01), Seiten 1-27, XP002495629 Gefunden im Internet: URL:http://www.oasis-open.org/committees/d ownload.php/16687/oasis-wss-rel-token-prof ile-1.1.pdf> [gefunden am 2008-09-11]
- OASIS OPEN 2005: "Bindings for the OASIS Security Assertion Markup Language (SAML) V2.0" SSTC-SAML-BINDINGS-2.0-CD-04, [Online] 17. Januar 2005 (2005-01-17), Seiten 1-46, XP002495630 Gefunden im Internet: URL:http://www.oasis-open.org/committees/d ownload.php/11040/sstc-saml-bindings-2.0-c d-04.%20pdf> [gefunden am 2008-09-11]
- H. TSCHOFENIG: "SIP SAML Profile and Binding" INTERNET-DRAFT, DRAFT-IETF-SIP-SAML-01.TXT, [Online] 23. Oktober 2006 (2006-10-23), XP002495631 Gefunden im Internet: URL:http://tools.ietf.org/pdf/draft-ietf-s ip-saml-01.pdf> [gefunden am 2008-09-11]

## Beschreibung

Die vorliegende Erfindung betrifft ein Verfahren zum Bereitstellen eines REL-Token. Zudem betrifft die vorliegende Erfindung eine Verwendung des vorhergenannten Verfahrens zum Bereitstellen lizenzierter Anwendungsdaten. Darüber hinaus betrifft die vorliegende Erfindung ein System zum Bereitstellen des REL-Tokens und ein System zum Bereitstellen der lizenzierten Anwenderdaten.

Eine der Erfindung zugrundeliegende Problematik wird nachfolgend beispielhaft anhand einer Videothek beschrieben, die die auszuleihenden Filme über das Internet bereitstellt.

Eine Videothek stellt als Dienstanbieter Anwenderdaten in Form von Filmausschnitten, Filmen oder Fernsehsendungen bereit. Ein Kunde oder Anwender kann diese Filme auf sein Abspielgerät oder seinen Rechner laden. Die Filme sind typischerweise mit einem Lizenz-Schlüssel kodiert. Gegen Bezahlung einer Gebühr übermittelt die Videothek dem Kunden den Lizenz-Schlüssel, und gewährt ihm so eine Lizenz zum Betrachten des Films.

Damit der Kunde den Schlüssel erhält, muss er sich bei der Videothek anmelden. Hierbei gibt der Kunde typischerweise seinen Wohnsitz (Authentifizierung) und Kreditkartennummer oder Bankverbindung für das Accounting an.

Für die Übermittlung des Lizenz-Schlüssels wurde die sogenannte Rights Expression Language (REL) eingeführt. Die REL schafft ein Protokoll, in dem die Form des Lizenz-Schlüssels festgelegt ist. Der Lizenzschlüssel wird in einem sogenannten REL-Token eingebettet. Das Abspielgerät oder das Abspielprogramm für den Film muss eingerichtet sein, den REL-Token zu verarbeiten, um den Lizenz-Schlüssel zu extrahieren.

In einem weiteren Schema kann der Kunde den erhaltenen REL-Token mehrfach verwenden, um weitere Filme von dem Dienstanbieter zu laden. Die mehrfache Verwendbarkeit des Lizenz-Schlüssels oder REL-Tokens entspricht einem Single-Sign-On Verfahren, da nur eine einmalige Registrierung des Kunden (Authentifizierung) notwendig ist.

Ein Protokoll zum Übertragen des REL-Token wurde von einer Standardisierungsorganisation OASIS definiert. Der REL-Token wird unter Verwendung von SOAP (Simple Object Access Protocol)-Webservice-Security-Mechanismen übertragen. Die SOAP-Webservice-Security-Mechanismen weisen basierend auf Nachrichten mit komplex aufgebauten Nachrichten, um vielfältigen Anwendungsgebieten und Sicherheitsaspekten gerecht zu werden. Die Verarbeitung des SOAP Protokolls, das Einbetten und das Extrahieren der REL-Token erfordert daher einen Aufwand, der für insbesondere bei mobilen Endgeräten zu einer erheblichen Belastung von Prozessoren und einem hohen Energieverbrauch führt. Ferner sind nicht alle Endgeräte in der Lage, SOAPbasierte Protokolle zu verarbeiten.

Das Dokument "Security Assertion Markup Language (SAML) V2.0 Technical Overview" beschreibt einen technischen Überblick der Security Assession Markup Language (SAML).

Das Dokument "Web Services Security Rights Expression Language (REL) Token Profile 1.1" beschreibt die Verwendung der REL und der Berücksichtigung der Web-Service-Securityspezifikation.

Das Dokument "Bindings for the OASIS Security Assertion Markup Language (SAML) V2.0" zeigt den MIME Medientypname application/samlassertion+xml für die Kapselung von SAML-Anweisungen in E-Mails.

Das Dokument "SIP SAML Profile and Binding" spezifiziert ein Session Initiation Protocol (SIP)-Profil der Security Assertion Markup Language (SAML).

Das Dokument US 2006 / 206 931 A1 beschreibt eine Methode in der Zugriff auf eine digitale Resource mittels einem Security Token gewährt wird, welches Information bezüglich einer Entscheidung über eine Gewährung des Zugriffs beinhaltet.

Eine Aufgabe der vorliegenden Erfindung besteht darin, REL-Token mit einem vereinfachten Protokoll bereitzustellen.

Diese Aufgabe wird durch das Verfahren mit den Merkmalen des Patentanspruchs 1 gelöst.

Ein erster Aspekt der Erfindung sieht ein Verfahren zum Bereitstellen mindestens eines REL (Rights Expression Language)-Tokens vor, wobei der REL-Token in einer Nachricht mittels eines MIME (Multipurpose Internet Mail Extension)-Protokolls bereitgestellt hat.

Eine Ausgestaltung sieht vor, dass der REL-Token in einer E-Mail mittels des MIME-Protokolls bereitgestellt wird.

Ein zweiter Aspekt der Erfindung sieht ein Verfahren zum Bereitstellen mindestens eines REL (Rights Expression Language)-Tokens vor, wobei der REL-Token in einer Nachricht mittels einem SAML (Security Assertion Markup Language)-Protokoll bereitgestellt wird.

Eine Ausgestaltung sieht vor, dass der REL-Token in einer SAML Assertion des SAML-Protokolls eingebettet wird.

Eine Ausgestaltung sieht vor, dass der REL-Token in einem Authorization-Decision-Statement des SAML-Protokolls eingebettet wird.

Eine Ausgestaltung sieht vor, dass der REL-Token von einem Server bereitgestellt wird, nachdem ein Endgerät an den Server eine Anfrage nach dem REL-Token gestellt wird.

Eine Ausgestaltung sieht vor, dass die Nachricht mit dem REL-Token in einer INVITE-Request eines SIP (Session Initation Protocol)-Protokolls bereitgestellt wird.

Eine Ausgestaltung sieht vor, dass die Nachricht mit dem REL-Token mittels eines http oder eines SIP Protokolls übermittelt wird.

Ein dritter Aspekt der Erfindung sieht ein Verfahren zum Bereitstellen kodierter Anwendungsdaten vor, wobei mit einem Lizenz-Schlüssel kodierte Anwendungsdaten von einem Server an ein Endgerät übertragen werden, der Lizenz-Schlüssel als REL-Token nach einem Verfahren zum Bereitstellen des REL-Tokens gemäß dem ersten oder zweiten Aspekt der Erfindung von dem Server an das Endgerät übertragen wird, und wobei das Endgerät die kodierten Anwendungsdaten basierend auf dem REL-Token dekodiert.

Ein vierter Aspekt der Erfindung sieht ein Verfahren zum Laden Anwendungsdaten vor, wobei ein Endgerät einen REL-Token nach einem Verfahren zum Bereitstellen des REL-Token gemäß dem ersten oder zweiten Aspekt an einen Server überträgt und der Server Anwendungsdaten in Abhängigkeit des REL-Tokens für das Endgerät freischaltet.

Ein fünfter Aspekt sieht ein Endgerät mit
einer Empfangseinrichtung zum Empfangen von Nachrichten gemäß einem SAML (Security Assertion Markup Language)-Protokoll oder einem MIME (Multipurpose Internet Mail Extension)-Protokoll und zum Extrahieren eines REL (Rights Expression Language)-Tokens aus einer der Nachrichten,
einer Entschlüsselungseinrichtung zum Entschlüsseln empfangener verschlüsselter Anwendungsdaten basierend auf dem REL-Token vor und mit
einer Datenverarbeitungseinrichtung zum Verarbeiten der entschlüsselten Anwendungsdaten.

Ein sechster Aspekt sieht ein Endgerät mit
einem Speicher zum Speichern mindestens eines REL (Rights Expression Language)-Tokens und mit
einer Ausgabeeinrichtung zum Senden des REL-Tokens über eine Nachricht gemäß einem SAML (Security Assertion Markup Language)-Protokoll oder gemäß einem MIME (Multipurpose Internet Mail Extension)-Protokoll vor.

Ein siebter Aspekt sieht einen Server mit
einer Datenbank zum Bereitstellen von verschlüsselten Anwendungsdaten,
einer Schlüsselverwaltungseinrichtung zum Bereitstellen mindestens eines REL-Tokens mit einem Lizenz-Schlüssel zum Entschlüsseln der verschlüsselten Anwendungsdaten, und mit einer Ausgabeeinrichtung zum Senden der verschlüsselten Anwendungsdaten und zum Senden des REL (Rights Expression Language)-Tokens mittels einer Nachricht nach einem SAML (Security Assertion Markup Language)-Protokoll oder einem MIME (Multipurpose Internet Mail Extension)-Protokoll vor.

Eine Ausgestaltung sieht eine Empfangseinrichtung (26) zum Empfangen eines REL (Rights Expression Language)-Tokens über eine Nachricht nach einem SAML (Security Assertion Markup Language)-Protokoll oder einem MIME (Multipurpose Internet Mail Extension)-Protokoll vor.

Ein achter Aspekt sieht ein System vor, das mindestens eines der vorhergehenden Endgeräte und mindestens eines der vorhergehenden Server aufweist, wobei das Endgerät und/oder der Server eine Ausgabeeinrichtung zum Senden des REL (Rights Expression Language)-Tokens mittels einer Nachricht nach einem SAML (Security Assertion Markup Language)-Protokoll oder einem MIME (Multipurpose Internet Mail Extension)-Protokoll aufweist.

Ein Datenträger mit gespeicherten Programmbefehlen zum Ausführen eines Verfahren nach einem der obigen Aspekte.
Ein Datenspeicher mit gespeicherten Daten, die beim Laden und Ausführen durch eine für den Datenspeicher vorgesehene Verarbeitungseinrichtung eines der vorhergehenden Verfahren ausführen.

Nachfolgend wird die vorliegende Erfindung anhand von Ausführungsformen und einer Zeichnung erläutert. In der Zeichnung zeigen die Figuren:
- Fig. 1: ein Blockdiagram zum Erläutern einer ersten Ausführungsform;
- Fig. 2: ein Schema zum Erläutern des Aufbaus eines REL-Tokens; und
- Fig. 3: ein Blockdiagram zum Erläutern einer zweiten Ausführungsform.

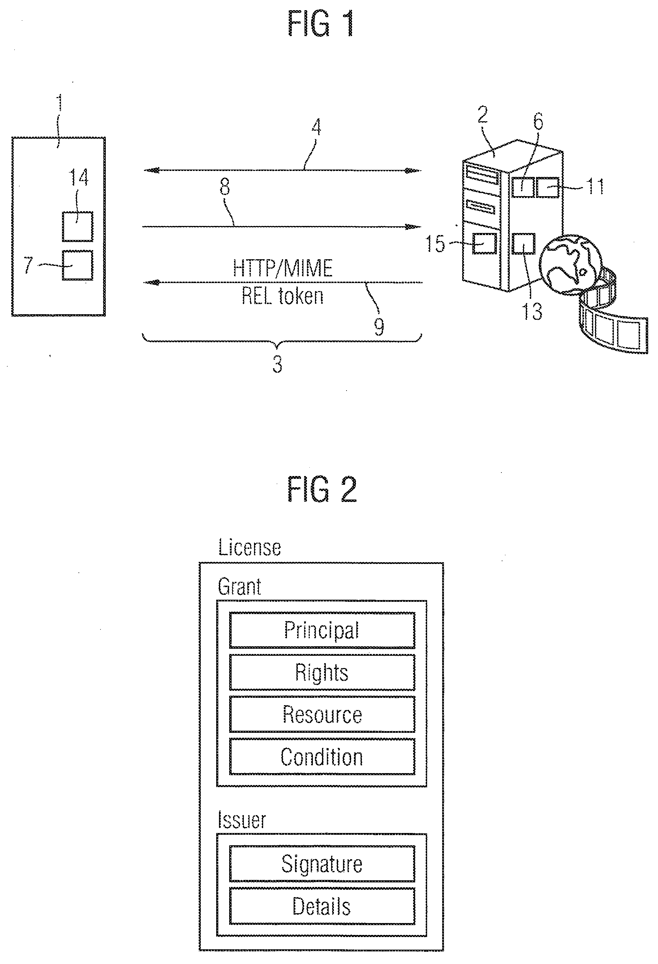

Eine erste Ausführungsform wird in Zusammenhang mit Figur 1 erläutert.

Ein Benutzer sucht Anwenderdaten, die seinem Interesse entsprechen. Diese Anwenderdaten können ein Film, eine Fernsehsendung, eine Live-Übertragung, ein Buch, ein Zeitungsartikel, ein Musikinhalt etc. sein. Die Anwenderdaten werden von einem Dienstanbieter bereitgestellt.

Ein Endgerät 1 des Benutzers dient zum Auswählen von Anwenderdaten. Das Endgerät 1 wird über einen Datenkanal mit einem Server 2 des Dienstanbieters verbunden. Der Datenkanal kann über eine IP/TCP Verbindung 3, z.B. unter Verwendung eines http, SIP oder anderen Protokolls erfolgen. Für mobile Endgeräte 1, wie Mobiltelefone, PDA, Laptop, wird der Datenkanal zwischen dem Endgerät 1 und dem Server 2 typischerweise über ein heterogenes Netzwerk mit Funkstrecken aufgebaut. Auf dem Server 2 wird ein Portal, z.B. eine Internet-Seite bereitgestellt, das ein Auswählen von gewünschten Anwenderdaten ermöglicht.

Das Endgerät 1 übermittelt eine Anfrage 4 nach ausgewählten Anwenderdaten. Die Anwenderdaten können dann von dem Server 2 über den Datenkanal an das Endgerät 1 übertragen werden. Es kann sich als zweckmäßig erweisen die Anwenderdaten über einen neuen Datenkanal mit anderen Eigenschaften, z.B. höherer Bandbreite, höherer minimaler Dienstqualität (QoS) zu übertragen. Dies ist insbesondere bei fortlaufender Übertragung, einem sogenannten Streaming, von Bedeutung. Ein entsprechender Datenkanal wird zwischen dem Endgerät 1 und dem Server 2 aufgebaut.

Das Endgerät 1 kann zugleich zum Abspielen, Darstellen, Verarbeiten und/oder Speichern der Anwenderdaten geeignet sein. Eine entsprechende Datenverarbeitungseinrichtung 5 der Anwenderdaten ist in dem Endgerät 1 integriert.

Die Anwendungsdaten sind auf dem Server 2 in einer Datenbank 11 gespeichert. Der Server 2 weist eine Verschlüsselungseinrichtung 6 auf. Diese Verschlüsselungseinheit 6 verschlüsselt die Anwenderdaten zumindest zum Teil, bevor sie an den Anwender und dessen Endgerät 1 übertragen werden. Hierdurch versichert sich der Dienstanbieter, dass der Anwender für die Anwenderdaten bezahlt. Die Lizenz-Schlüssel können in einer Schlüsselverwaltungseinrichtung 13 abgespeichert werden. In einer Alternative sind die Anwendungsdaten bereits vorab verschlüsselt auf dem Server 2 einschließlich der zugehörigen Lizenz-Schlüssel in der Datenbank 11 bzw. der Schlüsselverwaltungseinrichtung 13 abgespeichert.

Die Anteile der Anwenderdaten, die nicht verschlüsselt sind, kann sich der Kunde, um bereits einen Eindruck über den Inhalt der Anwenderdaten zu bekommen, ansehen.

Damit der Kunde den verschlüsselten Anteil der Anwenderdaten freischalten kann, benötigt er einen Lizenz-Schlüssel seitens des Dienstleisters. Das Endgerät 1 kann eine Dekodiereinheit 7 aufweisen, die mit Hilfe des Lizenz-Schlüssels die verschlüsselten Anwenderdaten entschlüsselt. Diesen Lizenz-Schlüssel oder auch kurz Lizenz stellt der Dienstanbieter dem Endgerät 1 bereit.

Damit der Server 2 dem Endgerät 1 den Lizenz-Schlüssel übermittelt ist eine Authentifizierung und ein Accounting des Kunden bei dem Dienstanbieter notwendig. Das Authentifizieren kann durch Übermitteln einer Adresse, z.B. durch Eingeben an einem Internetportal, einer Kennung eines Mobilfunkanschlusses des Kunden, oder in vielfältigen anderen Weisen erfolgen. Das Accounting kann in gleicherweise über ein Internetportal oder in herkömmlicher Weise durch einen schriftlichen Vertrag oder ähnlichem erfolgen.

Entscheidet sich der Kunde die Anwenderdaten zu erwerben, benötigt er wie zuvor ausgeführt den Lizenz-Schlüssel von dem Server 2. Das Endgerät 1 übermittelt dafür eine Anfrage 8 an den Server, in der der Server 2 zum Übermitteln des Lizenz-Schlüssels an das Endgerät 1 aufgefordert wird.

Auf diese Anfrage hin wird dem Endgerät 1 von dem Server 2 der Lizenz-Schlüssel 9 übermittelt. Der Server 2 veranlasst zugleich über ein Accounting-System die entsprechende Abbuchung oder Rechnungsstellung für die durch den Lizenz-Schlüssel freigeschalteten Anwenderdaten. Das Endgerät 1 verwendet den empfangenen Lizenz-Schlüssel zum Freischalten und Dekodieren der Anwenderdaten.

Im Folgenden wird das Augenmerk auf die Übermittlung des Lizenz-Schlüssels zu dem Endgerät 1 gerichtet. Hierfür werden ein Protokoll und Nachrichten des Protokolls mit bekannter Syntax bereitgestellt. Das Endgerät 1 kann somit die Anfrage nach Lizenz-Schlüssel stellen und aus einer erhaltenen Nachricht den anforderten Lizenz-Schlüssel extrahieren.

In Bezug auf Lizenz-Schlüssel ist ein Standard mit der Norm ISO/IEC 21000-5 unter dem Schlagwort Right Expression Language (REL) definiert. Auf dieser Norm basisierend werden in dieser und den anderen Ausführungsformen der Lizenz-Schlüssel übertragen.

Der Standard REL sieht ein sogenanntes REL-Token vor, in dem der Lizenz-Schlüssel mit noch weiteren Daten gekapselt ist. Ein diesbezüglicher REL-Token kann, wie in Figur 2 dargestellt, aussehen.

Unter "grant" ist spezifiziert, wofür der Lizenz-Schlüssel gültig ist. Dies umfasst, wem die Lizenz ausgestellt wurde (prinicipal), welche Rechte erworben wurden (rights), die zugehörigen Anwenderdaten (resource) und gegebenenfalls eine Bedingung (condition). Die Rechte können z.B. umfassen: die Anwenderdaten nur ansehen zu können, abspeichern zu können und/oder ändern zu können. Die Anwenderdaten können eine der bereits vorgenannten Anwenderdaten sein. Eine typische Bedingung gibt die Gültigkeitsdauer des REL-Tokens und damit des Lizenz-Schlüssels vor.

Das REL-Token enthält typischerweise auch den Aussteller des Lizenz-Schlüssels (issuer), eine verfälschungssichere Signatur (signature) und gegebenenfalls Details, wie den Zeitpunkt der Ausstellung. Der Aussteller ist in dem Ausführungsbeispiel der Server 2 des Dienstanbieters.

Das REL-Token wird von dem Server 2 an das Endgerät 1 übertragen.

In dieser Ausführungsform ist vorgesehen, den REL-Token in Form einer E-Mail, die MIME-basiert ist, zu übermitteln. MIME (Multi-purpose Internet Mail Extension) ermöglicht die Übertragung von nicht-textbasierten Inhalten mittels einer E-Mail. Das MIME-Protokoll sieht als einen Parameter den MIME-Typ vor. In dem MIME-Typ ist definiert, ob die E-Mail textbasierte, binäre, anwendungsbasierte oder anders geartete Anwendungsdaten transportiert.

Für die Übertragung der REL-Token wird der Medientyp auf "Application" für Anwendung gesetzt. Zudem wird ein MIME-Subtyp, ein weiterer Parameter des MIME-Protokolls, für die MIME-E-Mail definiert, nämlich rel+xml.

Optional können noch Festlegungen hinsichtlich der Codierung von Zeichen, z. B. UTF-8 oder UTF-16 angegeben werden. Erfolgt eine Übertragung gemäß einem 7-Bit-Transport müssen die UTF-8 oder UTF-16 codierten Zeichen in Base 64 oder Quoted Printable codiert werden. Bei einem 8-Bit-Transport, z.B. 8-Bit-MIME ISMTP oder NNTP wird keine Codierung von UTF-8 benötigt. Die UTF-16-Familie muss in Base 64 codiert werden. Bei einer rein binären Übertragung, z. B. http, ist kein Content-Transfer-Encoding notwendig.

Die Übertragung der MIME E-Mail kann über ein http-Protokoll oder ein SIP-Protokoll erfolgen.

Das Endgerät 1 weist eine Empfangseinrichtung 12 zum Empfangen der MIME E-Mail auf. Die Empfangseinrichtung 12 verarbeitet das Protokoll der MIME E-Mail und extrahiert den REL-Token. Der REL-Token wird an eine Entschlüsselungseinrichtung 14 weitergeleitet. Die Entschlüsselungseinrichtung 14 nutzt den REL-Token und den darin enthaltenen Lizenz-Schlüssel zum Dekodieren der kodierten Anwendungsdaten. Die Anwendungsdaten können dann von der Ausgabeeinrichtung verarbeitet, dargestellt, abgespeichert werden.

Eine Secure-MIME kann anstelle einer MIME E-Mail verwendet werden. Die Secure-MIME E-Mail ermöglicht ein Verschlüsseln der übertragenen Daten von dem Server 2 bis zu dem Endgerät 1. Ein Ausspähen des REL-Token durch Dritte kann somit verhindert oder zumindest erheblich erschwert werden.

Eine weitere Ausführungsform basiert auf der obigen Ausführungsform. Anstelle einer MIME E-Mail wird der REL-Token in mit dem Security Assertion Mark-up Language (SAML) Protokoll übertragen.

Hierzu wird das SAML-Protokoll erweitert, um das REL-Token aufnehmen zu können. Der REL-Token kann hierzu in dem "Authorization Decision Statement", wie in dem nachfolgenden Quelltext gezeigt, eingebettet werden.

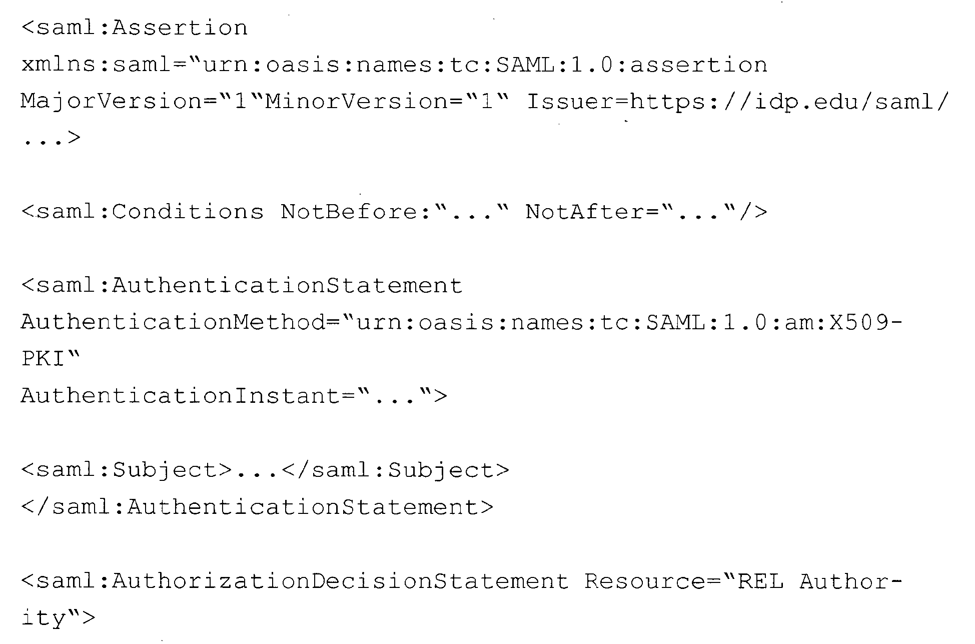

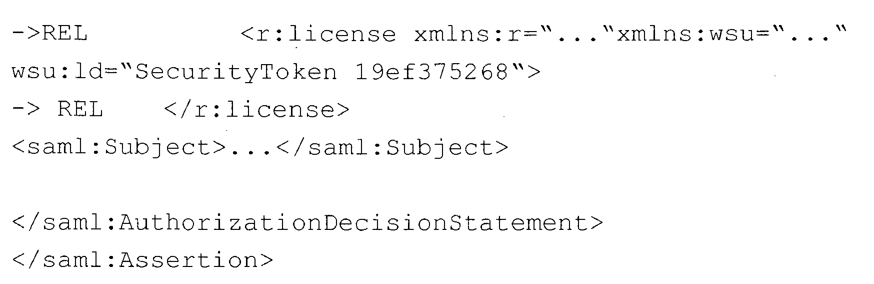

Die Anordnung des REL-Tokens an der oben dargestellten Stelle ist nur beispielhaft. Der REL-Token kann auch in anderen Elementen innerhalb der SAML-Assertion eingebettet werden.

Die Anfrage nach einem REL-Token kann ebenfalls in dem SAML Syntax erfolgen. Die Anfragen (Request Typen) des SAML Syntax können durch eine geeignete Anfrage erweitert werden. Diese neue Anfrage fordert den REL-Token an, z.B. SAML:RELTOKENREQUEST. Die Anfrage kann dann durch den Server 2 durch einen neuen Nachrichtstyp beantwortet werden, z.B. SAML:RELTOKENRESPONSE. In diesem Nachrichtstyp kann der REL-Token übertragen werden.

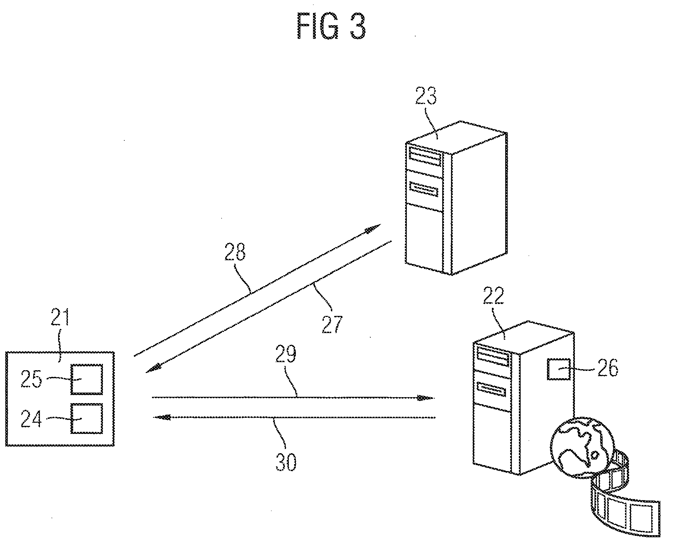

Eine weitere Anwendung oder Ausgestaltung ist in Figur 3 dargestellt. Eine der Ausgestaltung zugrundeliegende Fallgestaltung kann wie folgt sein. Ein Kunde wünscht, Anwendungsdaten von einem Dienstanbieter zu beziehen. Die Anwendungsdaten sind wie zuvor verschlüsselt. Der Kunde benötigt den entsprechenden Lizenz-Schlüssel in Form eines REL-Tokens, um entweder die Daten von dem Dienstanbieter herunterladen zu können oder die Daten, wenn er sie heruntergeladen hat, zu entschlüsseln. In diesem Ausführungsbeispiel bezieht der Kunde jedoch den REL-Token nicht von dem Dienstanbieter, sondern von einem Drittanbieter oder Lizenzvergeber. Der Drittanbieter kann z. B. eine Universität oder eine andere Organisation sein, die ihren Mitgliedern generell eine Lizenz zum Zugreifen auf die Anwenderdaten des Dienstanbieters gestattet. Die Mitglieder sind in dem Fall die Kunden.

Ein Endgerät 21, z.B. gleich dem Endgerät 1, generiert eine Anfrage 28 für einen REL-Token. Diese Anfrage 28 kann beispielsweise die Form einer SAML-Anfrage nach dem SAML-Protokoll aufweisen, wie in Zusammenhang der vorherigen Ausführungsform ausgeführt. Diese Anfrage wird von dem Endgerät 21 an einen Lizenz-Server 23 des Drittanbieters übermittelt. Der Lizenz-Server 23 des Drittanbieters stellt den REL-Token für das Endgerät 21 bereit. Der REL-Token wird in eine MIME-E-Mail 27 eingebettet und an das Endgerät 21 des Kunden übertragen. Oder alternativ wird der REL-Token in einem SAML-Syntax übertragen.

Das Endgerät 21 übernimmt den REL-Token und leitet diesen über eine Ausgabeeinrichtung 25 an den Server 22 des Dienstanbieters weiter. Die Übermittlung kann in Form der MIME E-Mail oder mit dem SAML-Protokoll 29 erfolgen. Der Server 22 weist eine Empfangseinrichtung 26 auf, die im Wesentlichen der zuvor beschriebenen Empfangseinrichtung 12 des Endgeräts 1 entspricht. Stimmt der REL-Token mit in einer Schlüsselverwaltungseinrichtung 13 abgespeicherten REL-Token überein, schaltet der Server 2 die Anwenderdaten 30 frei. Die Anwenderdaten 30 werden an das Endgerät 21 des Kunden übermittelt.

Die vorherigen Ausführungsformen beziehen jeweils einen REL-Token für einen Satz von Anwendungsdaten. In einer anderen Ausgestaltung ist der REL-Token für unterschiedliche Anwendungsdaten spezifiziert. Das Endgerät 21 speichert den REL-Token in einem Speicher 24. Mit der Anfrage nach neuen Anwendungsdaten wird der REL-Token an den Server 22 des Dienstanbieters über die Ausgabeeinrichtung 25 übermittelt. Die Aufforderung an den Server 22 neue Anwendungsdaten bereitzustellen, kann über ein SIP-Protokoll erfolgen. Der REL-Token kann in der anfänglichen INVITE Aufforderung des SIP-Protokolls eingebettet werden. Die Anwendungsdaten werden dann dem Endgerät 21 von dem Server freigeschaltet. Die mehrfache Verwendung des REL-Tokens ermöglicht ein Single Sign On Verfahren.

In einer Ausgestaltung des obigen Verfahrens schaltet der Server 22 die Anwendungsdaten frei und übermittelt sie unverschlüsselt an das Endgerät 21. Hierbei ist der Verarbeitungsaufwand sowohl auf Seite des Servers 22 und auf Seite des Endgeräts 21 wegen der nicht erforderlichen Verschlüsselung und Entschlüsselung gering.

## Patentansprüche

1. Verfahren zum Bereitstellen mindestens eines Rights Expression Language, REL-Tokens, wobei der mindestens eine REL-Token in einer Nachricht mittels eines Multipurpose Internet Mail Extension, MIME-Protokolls bereitgestellt wird.

2. Verfahren nach Anspruch 1, wobei der REL-Token in einer E-Mail mittels des MIME-Protokolls bereitgestellt wird.

3. Verfahren nach einem der Ansprüche 1 oder 2, wobei der REL-Token von einem Server (2; 22) bereitgestellt wird, nachdem ein Endgerät (1; 21) an den Server (2; 22) eine Anfrage nach dem REL-Token gestellt hat.

4. Verfahren nach einem der Ansprüche 1 bis 3, wobei die Nachricht mit dem REL-Token in einer INVITE-Request eines Session Initation Protocol, SIP-Protokolls bereitgestellt wird.

5. Verfahren nach einem der Ansprüche 1 bis 4, wobei die Nachricht mit dem REL-Token mittels eines http oder eines SIP Protokolls übermittelt wird.

6. Verfahren zum Bereitstellen kodierter Anwendungsdaten, wobei mit einem Lizenz-Schlüssel kodierte Anwendungsdaten von einem Server (2; 22) an ein Endgerät (1; 21) übertragen werden, der Lizenz-Schlüssel als Rights Expression Language, REL-Token nach einem Verfahren zum Bereitstellen mindestens eines REL-Tokens gemäß einem der Ansprüche 1 bis 5 von dem Server (2; 22) an das Endgerät (1; 21) übertragen wird, und wobei das Endgerät (1; 21) die kodierten Anwendungsdaten basierend auf dem REL-Token dekodiert.

7. Verfahren zum Laden von Anwendungsdaten, wobei ein Endgerät (1; 21) einen REL-Token nach einem Verfahren zum Bereitstellen mindestens eines REL-Tokens gemäß einem der Ansprüche 1 bis 5 an einen Server (2; 22) überträgt und der Server (2; 22) Anwendungsdaten in Abhängigkeit des REL-Tokens für das Endgerät (1; 21) freischaltet.

8. Endgerät (1; 21) mit
einer Empfangseinrichtung (12) zum Empfangen von Nachrichten gemäß einem Multipurpose Internet Mail Extension, MIME-Protokoll und zum Extrahieren eines Rights Expression Language, REL-Tokens aus einer der Nachrichten,
einer Entschlüsselungseinrichtung (14) zum Entschlüsseln empfangener verschlüsselter Anwendungsdaten basierend auf dem extrahierten REL-Token und mit
einer Datenverarbeitungseinrichtung (5) zum Verarbeiten von den entschlüsselten Anwendungsdaten.

9. Endgerät (21) mit
einem Speicher (24) zum Speichern mindestens eines Rights Expression Language, REL-Tokens und mit
einer Ausgabeeinrichtung (25) zum Senden des REL-Tokens über eine Nachricht gemäß einem Multipurpose Internet Mail Extension, MIME-Protokoll.

10. Server (2; 22) mit
einer Datenbank (11) zum Bereitstellen von verschlüsselten Anwendungsdaten,
einer Schlüsselverwaltungseinrichtung (13) zum Bereitstellen mindestens eines REL-Tokens mit einem Lizenz-Schlüssel zum Entschlüsseln der verschlüsselten Anwendungsdaten, und mit einer Ausgabeeinrichtung (15) zum Senden der verschlüsselten Anwendungsdaten und zum Senden des Rights Expression Language, REL-Tokens mittels einem Multipurpose Internet Mail Extension, MIME-Protokoll.

11. Server (2; 22) nach Anspruch 10 mit
einer Empfangseinrichtung (26) zum Empfangen eines Rights Expression Language, REL-Tokens mittels einer Nachricht nach einem Multipurpose Internet Mail Extension, MIME-Protokoll.

12. System mit
mindestens einem Endgerät (1; 21) nach Anspruch 8 oder 9 und mit mindestens einem Server (2; 22) nach Anspruch 10 oder 11, wobei das Endgerät (1; 21) und/oder der Server (2; 22) eine Ausgabeeinrichtung (15, 25) zum Senden des Rights Expression Language, REL-Tokens mittels einer Nachricht nach einem Multipurpose Internet Mail Extension, MIME-Protokoll aufweist.

13. Datenträger mit gespeicherten Programmbefehlen zum Ausführen eines Verfahrens nach einem der Ansprüche 1 bis 5.

## Claims

1. Method for providing at least one Rights Expression Language, REL token, wherein the at least one REL token is provided in a message by means of a Multipurpose Internet Mail Extension, MIME, protocol.

2. Method according to claim 1, wherein the REL token is provided in an email by means of the MIME protocol.

3. Method according to one of claims 1 or 2, wherein the REL token is provided by a server (2; 22), after a terminal (1; 21) has requested the REL token from the server (2; 22).

4. Method according to one of claims 1 to 3, wherein the message with the REL token is provided in an INVITE request of a Session Initiation Protocol, SIP protocol.

5. Method according to one of claims 1 to 4, wherein the message with the REL token is transferred by means of an http or SIP protocol.

6. Method for providing coded application data, wherein application data coded with a license key is transmitted from a server (2; 22) to a terminal (1; 21), the license key is transmitted as a Rights Expression Language, REL token according to a method for providing at least one REL token according to one of claims 1 to 5 from the server (2; 22) to the terminal (1; 21) and wherein the terminal (1; 21) decodes the coded application data based on the REL token.

7. Method for downloading application data, wherein a terminal (1; 21) transmits a REL token according to a method for providing at least one REL token according to one of claims 1 to 5 to a server (2; 22) and the server (2; 22) releases application data for the terminal (1; 21) as a function of the REL token.

8. Terminal (1; 21) with
a receive facility (12) for receiving messages according to a Multipurpose Internet Mail Extension, MIME protocol and for extracting a Rights Expression Language, REL token from one of the messages,
a decryption facility (14) for decrypting received encrypted application data based on the extracted REL token and with a data processing facility (5) for processing the decrypted application data.

9. Terminal (21) with
a storage unit (24) for storing at least one Rights Expression Language, REL token and with
an output facility (25) for sending the REL token by way of a message according to a Multipurpose Internet Mail Extension, MIME protocol.

10. Server (2; 22) with
a database (11) for providing encrypted application data,
a key management facility (13) for providing at least one REL token with a license key for decrypting the encrypted application data and with
an output facility (15) for sending the encrypted application data and for sending the Rights Expression Language, REL token by means of a Multipurpose Internet Mail Extension, MIME protocol.

11. Server (2; 22) according to claim 10 with
a receive facility (26) for receiving a Rights Expression Language, REL token by means of a message according to a Multipurpose Internet Mail Extension, MIME protocol.

12. System with
at least one terminal (1; 21) according to claim 8 or 9 and with at least one server (2; 22) according to claim 10 or 11, wherein the terminal (1; 21) and/or the server (2; 22) has an output facility (15, 25) for sending the Rights Expression Language, REL token by means of a message according to a Multipurpose Internet Mail Extension, MIME protocol.

13. Data medium with stored program commands for executing a method according to one of claims 1 to 5.

## Revendications

1. Procédé pour mettre à disposition au moins un jeton REL, Rights Expression Language, l'au moins un jeton REL étant mis à disposition dans un message au moyen d'un protocole MIME, Multipurpose Internet Mail Extension.

2. Procédé selon la revendication 1, le jeton REL étant mis à disposition dans un courrier électronique au moyen du protocole MIME.

3. Procédé selon l'une des revendications 1 ou 2, le jeton REL étant mis à disposition par un serveur (2 ; 22) après qu'un terminal (1 ; 21) a adressé au serveur (2 ; 22) une demande de jeton REL.

4. Procédé selon l'une des revendications 1 à 3, le message comportant le jeton REL étant mis à disposition dans une requête INVITE d'un protocole SIP, Session Initiation Protocol.

5. Procédé selon l'une des revendications 1 à 4, le message comportant le jeton REL étant transmis au moyen d'un protocole http ou d'un protocole SIP.

6. Procédé pour mettre à disposition des données d'application codées, des données d'application codées au moyen d'une clé de licence étant transmises par un serveur (2 ; 22) à un terminal (1 ; 21), la clé de licence étant transmise en tant que jeton REL, Rights Expression Language, selon un procédé de mise à disposition d'au moins un jeton REL selon l'une des revendications 1 à 5 par le serveur (2 ; 22) au terminal (1 ; 21) et le terminal (1 ; 21) décodant les données d'application codées sur la base du jeton REL.

7. Procédé de chargement de données d'application, un terminal (1 ; 21) transmettant un jeton REL selon un procédé de mise à disposition d'au moins un jeton REL selon l'une des revendications 1 à 5 à un serveur (2 ; 22) et le serveur (2 ; 22) débloquant des données d'application en fonction du jeton REL pour le terminal (1 ; 21).

8. Terminal (1 ; 21) comportant
un dispositif récepteur (12) pour la réception de messages selon un protocole MIME, Multipurpose Internet Mail Extension, et pour extraire un jeton REL, Rights Expression Language, hors de l'un des messages,
un dispositif de décryptage (14) pour décrypter des données d'application cryptées reçues sur la base du jeton REL extrait et
un dispositif de traitement de données (5) pour traiter des données d'application décryptées.

9. Terminal (21) comportant
une mémoire (24) pour sauvegarder au moins un jeton REL, Rights Expression Language, et
un dispositif de sortie (25) pour émettre le jeton REL via un message selon le protocole MIME, Multipurpose Internet Mail Extension.

10. Serveur (2 ; 22) comportant
une base de données (11) pour la mise à disposition de données d'application cryptées,
un dispositif de gestion de clés (13) pour la mise à disposition d'au moins un jeton REL avec une clé de licence pour décrypter les données d'application cryptées et
un dispositif de sortie (15) pour émettre les données d'application cryptées et pour émettre le jeton REL, Rights Expression Language, au moyen d'un protocole MIME, Multipurpose Internet Mail Extension.

11. Serveur (2 ; 22) selon la revendication 10, comportant un dispositif récepteur (26) pour recevoir un jeton REL, Rights Expression Language, au moyen d'un message selon un protocole MIME, Multipurpose Internet Mail Extension.

12. Système comportant au moins un terminal (1 ; 21) selon la revendication 8 ou 9 et au moins un serveur (2 ; 22) selon la revendication 10 ou 11, le terminal (1 ; 21) et/ou le serveur (2 ; 22) comportant un dispositif de sortie (15, 25) pour émettre le jeton REL, Rights Expression Language, au moyen d'un message selon un protocole MIME, Multipurpose Internet Mail Extension.

13. Support de données comportant des commandes de programme enregistrées pour exécuter un procédé selon l'une des revendications 1 à 5.
